# EUROPÄISCHE PATENTSCHRIFT

(11) **EP 1 903 355 B1**
(45) Veröffentlichungstag und Bekanntmachung des Hinweises auf die Patenterteilung: **11.06.2014**
(21) Anmeldenummer: 07017442.0
(22) Anmeldetag: 06.09.2007
(51) Int. Cl.: G01T 1/02, G01T 1/17, G01T 3/06

(54) **Verfahren und System zur Messung der Anzahl hochenergetischer Neutronen**
Method and system for measuring the number of high energy neutrons
Procédé et système de mesure du nombre de neutrons hautement énergétiques

(30) Priorität: 20.09.2006 DE 102006044734
(43) Veröffentlichungstag der Anmeldung: 26.03.2008
(73) Patentinhaber: Berthold Technologies GmbH & Co. KG, 75323 Bad Wildbad (DE); Deutsches Elektronen-Synchrotron DESY, 22607 Hamburg (DE)
(72) Erfinder: Leuschner, Albrecht, 25469 Halstenbek (DE); Klett, Alfred, Dr., 75305 Neuenbürg (DE)
(74) Vertreter: Schön, Thilo

(56) Entgegenhaltungen:
- WO-A-2006/097338
- KREGER W E ET AL: "C<12>(n,p) B<12> cross section for 14.9 to 17.5 MeV neutrons" Physical Review USA, Bd. 113, Nr. 3, 1. Februar 1959 (1959-02-01), Seiten 890-894, XP002484366
- RUBY L ET AL: "A fast-neutron activation detector for 14-Me V pulsed neutron sources" Nuclear Instruments and Methods Netherlands, Bd. 15, Nr. 1, Februar 1962 (1962-02), Seiten 74-76, XP002484367
- NELSON A ET AL: "Calibration of a detector for measuring dd fusion neutrons based on the <9>Be(n,/spl alpha/)<6>He reaction" PLASMA SCIENCE, 2004. ICOPS 2004. IEEE CONFERENCE RECORD - ABSTRACTS. THE 31ST IEEE INTERNATIONAL CONFERENCE ON BALTIMORE, MD, USA JUNE 28-JULY 1, 2004, PISCATAWAY, NJ, USA,IEEE, 28. Juni 2004 (2004-06-28), Seiten 399-399, XP010728961 ISBN: 978-0-7803-8334-0
- WOLF A ET AL: "Utilisation of teflon-covered Ge(Li) diodes for fast neutron detection" Nuclear Instruments and Methods Netherlands, Bd. 148, Nr. 1, 1. Januar 1978 (1978-01-01), Seiten 195-197, XP002484368 ISSN: 0029-554X

## Beschreibung

### Technischer Hintergrund

Die vorliegende Erfindung betrifft ein Verfahren zum Messen der Intensität von hochenergetischen gepulsten Neutronen, die in einem Detektionsvolumen auftreffen, sowie ein System zur Durchführung des Verfahrens.
Neutronen können nach ihrer Energie unterschieden werden., wobei man von "niederenergetischen" Neutronen spricht, wenn die Energie unterhalb von 10 MeV liegt, und von "hochenergetischen" Neutronen, wenn die Energie oberhalb von 10 MeV liegt. Hochenergetische Neutronen treten im wesentlichen nur beim Betrieb von Beschleunigeranlagen oder in der kosmischen Strahlung auf. Die Primärstrahlung an Beschleunigern, in der Regel Protonen oder Elektronen, kann z. B. an im Strahlrohr befindlichen Teilchen oder bei Strahlverlusten an Materialien des Beschleunigers oder seiner Umgebung hochenergetische Neutronen als Sekundärstrahlung erzeugen. Dazu sind Primärstrahlenergien oberhalb von 100 MeV erforderlich.

### Stand der Technik

Vor allem im Strahlenschutz ist es häufig erforderlich, die Ortsdosis, die Personendosis oder die Fluenz von Neutronenfeldern zu messen. Zur Messung der Umgebungs-Äquivalentdosis als Ortsdosis werden vorzugsweise sogenannte Rem-Counter verwendet. Das sind Neutronen-Sonden, die auf einem Moderationsprozess mit nachfolgender Nachweis von thermalisierten Neutronen in einem geeigneten Detektor für thermische Neutronen beruhen. Meistens werden Proportionalzählrohre, die mit ³He oder mit BF₃ als Zählgas gefüllt sind, verwendet.

Aus der DE 43 44 955 C1 ist dazu eine Vorrichtung zum Nachweis von Neutronen bekannt, die eine Hohlkugel aus einem Moderatormaterial wie Polyethylen (PE) umfasst und ein im Inneren der Hohlkugel angeordnetes Zählrohr. Das Zählrohr enthält neben ³He als Reaktionspartner auch noch CH₄ zum "direkten" Nachweis von hochenergetischen Neutronen über Rückstossprotonen. Es gibt auch andere Beispiele für diese Nachweistechniken, die in Radiation Detection And Measurement von Glenn F. Knoll, John Wiley & Sons, 3rd Edition, January 2000 beschrieben sind.

Nachteilig an Rem-Countern ist, dass das Ansprechvermögen als Funktion der Energie bei Neutronenenergien oberhalb 10 MeV zu stark abfällt und damit Unterbewertungen in der Dosismessung auftreten.

Um das Problem der reduzierten Nachweiswahrscheinlichkeit bei hohen Energien zu lösen, ist von C. Biratttari et. al. in Nuclear Instruments and Methods A, 1990, S. 250 ein Detektor vorgeschlagen worden, der innerhalb des Moderationsvolumens eine Blei-Zwischenschicht aufweist, die einen inneren Bereich des Detektors umgibt. In der Blei-Schicht können hochenergetische Neutronen über Spallation zusätzliche niederenergetische Neutronen erzeugen, die mit hoher Nachweiswahrscheinlichkeit detektiert werden können zu einer Erhöhung des Ansprechvermögens des Detektors führen.

Es ist aber bei allen derartigen Neutronen-Detektoren nachteilig, dass sie nur bis zu gewissen maximalen Intensitäten von Neutronenfeldern richtig messen können. Dies wird dadurch bedingt, dass Proportionalzählrohre grundsätzlich eine endliche Totzeit aufweisen. Diese beträgt bei diesen Detektoren in der Regel einige µs. Treten im Vergleich zur Totzeit sehr hohe Zählraten auf, können vom Zählrohr nicht mehr alle Ereignisse registriert werden. Das vom Zählrohr ausgelesene Signal ist aufgrund von sogenannten Totzeiteffekten nicht mehr proportional zur Flussdichte der einfallenden Neutronen und als Folge davon wird die Intensität des Neutronenfeldes unterschätzt.

Das Problem von Totzeiteffekten tritt insbesondere bei gepulster Neutronenstrahlung auf, wie sie in dem Fall zustande kommen, wo ein gepulster Strahl eines Teilchenbeschleunigers im Bereich der Strahlführung Pulse hochenergetischer Neutronen produziert. Bei gepulster Strahlung können sehr hohe instantane Intensitäten des Strahlungsfeldes vorliegen, die ein Detektor, der eine endliche Totzeit hat, nicht korrekt bestimmen kann. Bei kontinuierlichen Strahlungsfeldern können hohe Intensitäten meist noch erkannt und in gewissen Grenzen auch noch durch eine "Totzeit-Korrektur" rechnerisch berichtigt werden. Bei gepulsten Strahlungsfeldern ist das aber unmöglich, da die Intensität des Strahlungsfelds gemittelt über eine längere Messzeit relativ gering sein kann, während die kurzzeitigen Momentanwerte sehr hoch und unbemerkt in der Totzeitbegrenzung liegen können.

Bei Neutronen-Detektoren, die auf einem Moderationsprozess basieren, gibt es einen entgegenwirkenden Effekt. Der Moderations-Prozess selbst dauert je nach Größe des Moderators und abhängig von der Energie der einfallenden Neutronen eine gewisse Zeit. Typische Moderationszeiten liegen in der Größenordnung von maximal bis zwischen 10 µs und 100 µs. Die Neutronen treffen um diese Moderationszeiten verzögert auf den Detektor auf. Da die Moderation ein statistischer Prozess ist, liegt die Streuung der zeitlichen Verteilung der Neutronen in der gleichen Größenordnung. Die Moderation wirkt dadurch bis zu einem gewissen Grad Totzeit-Effekten entgegen. Sie kann aber die Wirkung sehr hoher instantaner Zählraten und die damit verbundene Sättigung von Proportional-Zählrohren prinzipiell nicht vermeiden. Man ist deshalb mit diesen Methoden bisher nicht in der Lage die Äquivalentdosisleistung gepulster hochenergetischer Neutronenstrahlung korrekt zu bestimmen.

"In William E. Kreger et al "C12 (n,p) B12 Cross Section for 14,9 - to 17,5 - Mev Neutrons" Physical Review USA Band 113 Nr. 3 - 1. Februar 1959 (1959 -02-01) Seiten 890 bis 894, XP002484366" wird vorgeschlagen, zur Messung des C¹² (n.p)B¹² Wirkungsquerschnittes ein Target mit gepulster Neutronenstrahlung zu bestrahlen und hierbei den B¹² -β-Zerfall zu messen. Bei diesem Experiment erfolgte die Messung des Neutronenschlusses mittels konventioneller Neutronenzähler.

### Darstellung der Erfindung

Ausgehend vom Stand der Technik liegt der vorliegenden Erfindung daher die Aufgabe zugrunde, ein Verfahren und ein System zur genaueren Bestimmung der Fluenz von hochenergetischen Neutronen anzugeben.

In RUBY L ET AL: "A fast-neutron activation detector for 14-Me V pulsed neutron sources", Nuclear Instruments and Methods Netherlands, Bd. 15, Nr. 1, Februar 1962 (1962-02), Seiten 74-76, wird ein Neutronen-Detektor beschrieben, der die Anzahl der Neutronen bestimmt anhand der gemessenen Gammastrahlen aus dem Zerfall von Pb^{207m}, das bei der Aktivierung von einem Blei-Target durch die Bombardierung mit Neutronen entstanden ist. 20ms nach dem Neutronenpuls werden die entstandenen Gammastrahlen während eines Zeitfensters von 2.40 s in einem Szintillationszähler detektiert und so auf die Anzahl der Neutronen rückgeschlossen.

### Darstellung der Erfindung

Ausgehend vom Stand der Technik liegt der vorliegenden Erfindung daher die Aufgabe zugrunde, ein Verfahren und ein System zur genaueren Bestimmung der Fluenz von hochenergetischen Neutronen anzugeben.

Die Erfindung basiert auf der Idee, dass gepulste hochenergetische Neutronenstrahlung durch Neutronenaktivierung an geeigneten Targetmaterialien im Detektor oder in der Detektorumgebung totzeitfrei ein oder mehrere instabile Zwischenkerne mit relativ kurzer Halbwertszeit erzeugt, deren nachfolgender radioaktiver Zerfall über den Nachweis von Alpha-, Beta-, Gamma- oder Röntgen-Strahlung oder einer Kombination dieser Strahlenarten detektiert wird. Der Strahlungsnachweis erfolgt zeitaufgelöst zeitlich relativ zu den prompten Impulsen der gepulsten Neutronenstrahlung. Die zeitliche Korrelation der detektierten Ereignisse zu den Strahlungsfeldimpulsen ergibt sich aus der charakteristischen Halbwertszeit eines instabilen Zwischenzustands. Durch die Verwendung eines geeigneten radioaktiven Zwischenkerns können die detektierten Ereignisse auf erheblich längere Zeitintervalle als die typische Moderationsdauer verteilt und damit totzeit-frei gemessen werden. Das Grundprinzip besteht also in einer Speicherung von Dosis- oder Intensitäts-Information in Form von aktivierten radioaktiven Zwischenkernen.

Es gibt zahlreiche Neutronenreaktionen an verschiedenen Targetkernen, die über instabile Zwischenkerne mit kurzen Halbwertszeiten zur Emission der oben angeführten Teilchenarten führen können und deshalb zur totzeit-freien Messung gepulster Strahlung geeignet wären. Zum Beispiel gibt es die an ¹²C produzierten intermediäre Kerne ¹²B (β⁻ Zerfall, T_{1/2} 20 ms) oder ⁸Li (β⁻ Zerfall, T_{1/2} 840 ms), die zu einen Beta-Zerfall mit kurzer Verzögerungszeit führen. Ferner kann man zum Beispiel an ⁹Be den Kern ⁸He (β⁻ Zerfall, T_{1/2}800 ms) oder an ²⁰⁷Pb das Isomer ^{207m}Pb (Photonen-Emission, T_{1/2} 810 ms) erzeugen. Eine der Erfindung entsprechende Sonde muss das Targetmaterial, eine geeignete Detektoranordnung, sowie die zeitaufgelöste Messung enthalten.

Der Grundgedanke der Erfindung besteht somit in der:
- Bereitstellung von einem oder mehreren Strahlungsdetektoren zur Messung von Alpha-. Beta-, Gamma- oder Röntgenstrahlung mit der Möglichkeit zur Teilchenidentifikation und oder Energiebestimmung über ein oder mehrere einstellbare elektronische Diskriminator-Schwellen oder Fenster in unterschiedlichen Messkanälen,
- Bereitstellung eines Targetmaterials zur Aktivierung eines geeigneten radioaktiven Zwischenzustands mit kurzer Halbwertszeit durch hochenergetische gepulste Neutronen; das im Detektormaterial direkt enthalten oder in der unmittelbaren Umgebung des Strahlungsdetektors oder der Strahlungsdetektoren angeordnet ist,
- Durchführung einer Messung, bei der die Anzahl der in dem oder den Strahlungsdetektoren auftretenden Ereignisse als Funktion der Zeit bestimmt wird,
- Festlegung eines Startzeitpunktes,
- Festlegung von einem oder mehrerer Auswertungszeitfenster nach dem Startzeitpunkt,
- Auswerten der in dem oder den Auswertungszeitfenstern gemessenen Ereignissen und
- Ausgabe eines Messwertes, der von der Auswertung der Auswertungszeitfenstern der verwendeten Messkanäle abhängt.

Außerdem wird die obige Aufgabe durch ein System gemäß Anspruch 18 gelöst, das die bereits im Zusammenhang mit dem erfindungsgemäßen Verfahren genannten Vorteile hat.

Unter einem "Ereignis" soll im Folgenden das Ausgeben eines Impulses durch einen Strahlungsdetektor in einem bestimmten Messkanal verstanden werden, das auf einen radioaktiven Zerfall eines instabilen Zwischenkerns zurückgeht. Unter "Messkanal" soll zum Beispiel die Teilchenart oder ein über Impulshöhenanalyse bestimmter Energiebereich verstanden werden.

Bei der zeitaufgelösten Bestimmung wird mit dem Ereignis auch die Zeit seines Auftretens gespeichert, so dass bei der späteren Auswertung nicht nur die Gesamtzahl der Ereignisse zur Verfügung steht, sondern die Zahl der Ereignisse als Funktion des Messzeitpunktes analysiert werden kann. Messtechnisch wird dabei so vorgegangen, dass jeweils die Zahl nⱼₖ der in einem Zeitintervall j für einen Messkanal k liegenden Ereignisse bestimmt wird. Um die jeweilige Zählrate aⱼₖ zu bestimmen muss nⱼₖ durch die Länge (tⱼ - tⱼ₋₁) des Zeitintervalls j geteilt werden.
Unter dem Startzeitpunkt wird bei einer derartigen Messung dasjenige Zeitintervall verstanden, bei dem durch prompte Sekundärstrahlung, die durch die gepulste hochenergetische Neutronenstrahlung in dem oder in den Detektoren generiert wird, hohe momentane Zählraten oberhalb von vorher festgelegten Schwellenwerten festgestellt werden.

### Kurze Beschreibung der Zeichnungen

Im Folgenden wird die vorliegende Erfindung anhand eines lediglich bevorzugten Ausführungsbeispiels zeigenden Zeichnung erläutert. In der Zeichnung zeigen
- Figur 1a,1b:: zwei Ausführungsbeispiele eines erfindungsgemäßen Detektorsystems zur Durchführung des erfindungsgemäßen Verfahrens,
- Figur 2:: eine Darstellung der Daten einer zeitaufgelösten Messung,
- Figur 3:: ein Summenspektrum der Daten einer zeitaufgelösten Messung und
- Figur 4.: ein Summenspektrum in einer Lethargie-Darstellung zur Auswertung.

### Beschreibung der Ausführungsbeispiele

Zunächst sollen die verfahrensmässigen Grundlagen erläutert werden:
Hochenergetische Neutronen erzeugen am Targetmaterial ¹²C oberhalb einer Reaktionsschwelle von 23 MeV über die Kernreaktion ¹²C (n, pα) ⁸Li als Reaktionsprodukt ⁸Li. Das ⁸Li unterliegt anschließend einen Beta-Zerfall mit einer Halbwertszeit von 840 ms und einer maximalen Beta-Energie von 13 MeV. Diese Beta-Energien sind vergleichsweise sehr hoch und lassen sich wirksam für eine selektive Energieschwellendiskriminierung verwenden.

Dies bedeutet, dass beim Auftreffen hochenergetischer Neutronen auf das Targetmaterial ¹²C Beta-Strahlung erzeugt wird, wobei die Zahl der erzeugten Beta-Teilchen einem Zerfallsgesetz der Form aⱼ = a₀ 2^{-t/T1/2} folgt mit einer Halbwertszeit T_{1/2} von 840 ms relativ zum Auftreffen der hochenergetischen Neutronen auf dem Detektorssystem. Damit können im Strahlungsdetektor Beta-Teilchen mit dem entsprechenden Zerfallsmuster nachgewiesen werden. Die Ereignisse im Auswertezeitfenster können also als ein Indikator für das Vorhandensein von hochenergetischen Neutronen im Neutronpuls dienen und für die Bestimmung der Fluenz herangezogen werden.

In bevorzugter Weise wird der Startzeitpunkt als der Zeitpunkt festgelegt, bei dem die gemessene Anzahl von Ereignissen eine Auslöseschwelle überschreitet. Der Startzeitpunkt kann alternativ auch durch ein äusseres Signal festgelegt werden, das beispielsweise von einer Beschleunigeranlage mit gepulstem Strahl kommt.

Insbesondere eine "Einzelpuls-Auswertung", bei der nur ein Zählereignis ausgewertet wird, kann in der Weise erfolgen, dass geprüft wird, ob die Gesamtzahl der im Auswertungszeitfenster erfassten Ereignisse oberhalb einer ersten Schwelle und damit über einem Rauschpegel liegt, so dass daraus auf das Auftreffen von hochenergetischen Neutronen während des ersten Zeitintervalls geschlossen werden kann. In weiter bevorzugter Weise ist der ausgegebene Zählerwert für den Fall, dass die erste Schwelle überschritten wird, proportional zur Gesamtzahl der in dem Auswertungszeitfenster gemessenen Ereignisse. Dies stellt eine einfache Methode dar, um einen Zählerwert als Maß für die Fluenz hochenergetischer Neutronen auszugeben, die auch bei geringer Gesamtzahl von Ereignissen im Auswertungszeitfenster zuverlässig arbeitet.

Darüber hinaus kann auch das "Spektrum" verzögerter Ereignisse quantitativ analysiert werden, indem im Auswertungszeitfenster der Verlauf der Anzahl der Ereignisse als Funktion der Zeit analysiert wird. Dies geschieht in bevorzugter Weise durch Anpassung eines Zerfallsgesetzes der Form αⱼ = α_{0 ˙} 2-^{tj/T1/2} an die Messdaten. Auf diese Weise kann aus dem so festgelegten a₀ die Anzahl der zum Startzeitpunkt im Detektor aufgetroffenen hochenergetischen Neutronen bestimmt werden. Dies ist insbesondere deswegen leicht möglich, weil der andere in dem Zerfallsgesetz anzupassende Parameter, nämlich die Halbwertszeit T_{1/2} der beim gewählten Targetmaterial emittierten Strahlung des entstandenen Radionuklids (intermediärer Kern) bekannt ist. Es ist somit möglich, die Zahl der hochenergetischen Neutronen, die zum Startzeitpunkt aufgetroffen sind, auf der Grundlage der Auswertung der im Auswertungszeitfenster erfassten Ereignisse zu bestimmen, ohne dass Totzeiteffekte, die zum Startzeitpunkt möglicherweise auftreten, einen Einfluss haben.

In weiter bevorzugter Weise kann ein zweites Auswertungszeitfenster festgelegt werden, wobei die in dem zweiten Auswertungszeitfenster gemessenen Ereignisse ebenfalls ausgewertet werden. Somit kann insbesondere bei der Einzelpuls-auswertung eine höhere Genauigkeit erreicht werden.

In bevorzugter Weise ist die Lage und die Länge der Auswertungszeitfenster durch die Lebensdauer der im Targetmaterial durch hochenergetische Neutronen erzeugten Radionuklids festgelegt. Hierbei wird ein Auswertungszeitfenster insbesondere so festgelegt, dass die darin erfasste Strahlung auf Partikel zurückgeht, die infolge des Zerfalls des im Targetmaterial gebildeten Radionuklids emittiert worden sind.

Um die Genauigkeit der Auswertung zu verbessern, kann gemäß einer bevorzugten Ausführungsform des Verfahrens eine Vielzahl von Auswertungsrahmen festgelegt werden, wobei jeder Auswertungsrahmen einen Startzeitpunkt und ein Einzelzeitfenster umfasst. Der zeitliche Abstand zwischen Startzeitpunkt und Einzelzeitfenster ist für alle Auswertungsrahmen gleich und das Auswertungszeitfenster wird durch Aufsummieren der gemessenen Anzahlen in den Einzelzeitfenstern festgelegt. Bei dieser sogenannten "Vielpuls-Auswertung" ist das Auswertungszeitfenster ein Summenspektrum, das eine gegenüber den Einzelzeitfenstern verbesserte statistische Qualität hat, so dass die Anpassung eines Zerfallsgesetzes der Form αⱼ = α₀ ˙ 2-^{tj/T1/2} mit höherer Genauigkeit möglich ist. Die Startzeitpunkte für die Auswertungsrahmen können wieder durch eine Auslöseschwelle oder durch ein äußeres Signal festgelegt werden.

Um insbesondere mehrere verschiedene, im Targetmaterial durch hochenergetische Neutronen erzeugte Radionuklide bei der Auswertung berücksichtigen zu können, ist es vorteilhaft, wenn die Auswertungsrahmen zweite Einzelzeitfenster umfassen, wobei ein zweites Auswertungszeitfenster durch Aufsummieren der zweiten Einzelzeitfenster festgelegt wird.

Weiter bevorzugt können nicht nur die Einzelzeitfenster summiert werden, sondern es können aus jedem Auswertungsrahmen die zwischen einem Anfangszeitpunkt vor dem Startzeitpunkt und einem Endzeitpunkt nach dem Ende des Einzelfensters gemessenen Ereignisse zeitaufgelöst addiert werden. Das sich so ergebene Summenspektrum ermöglicht eine Kontrolle, ob der Verlauf der gemessenen Anzahlen dem erwarteten Verlauf entspricht, so dass eventuelle elektronische Fehler leicht erkennbar sind.

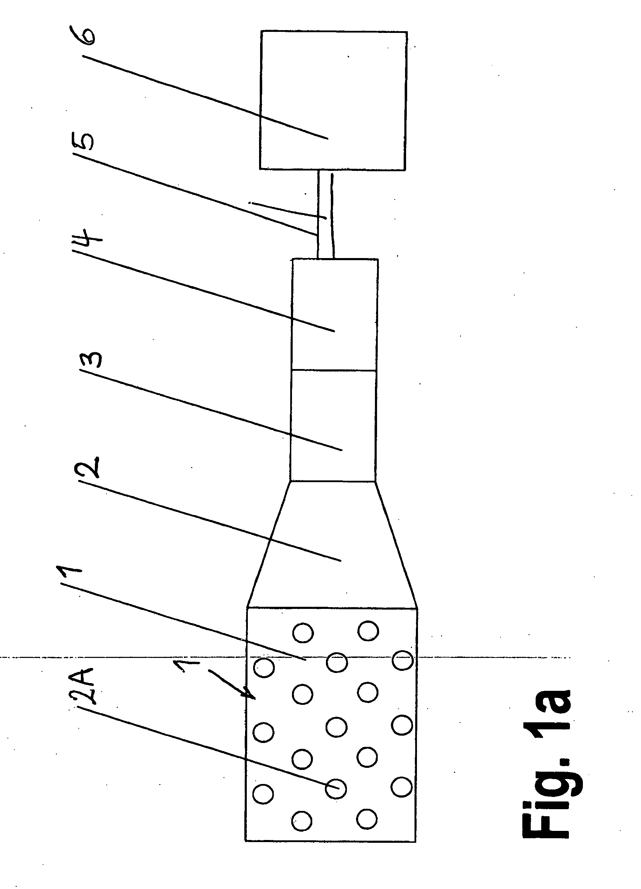

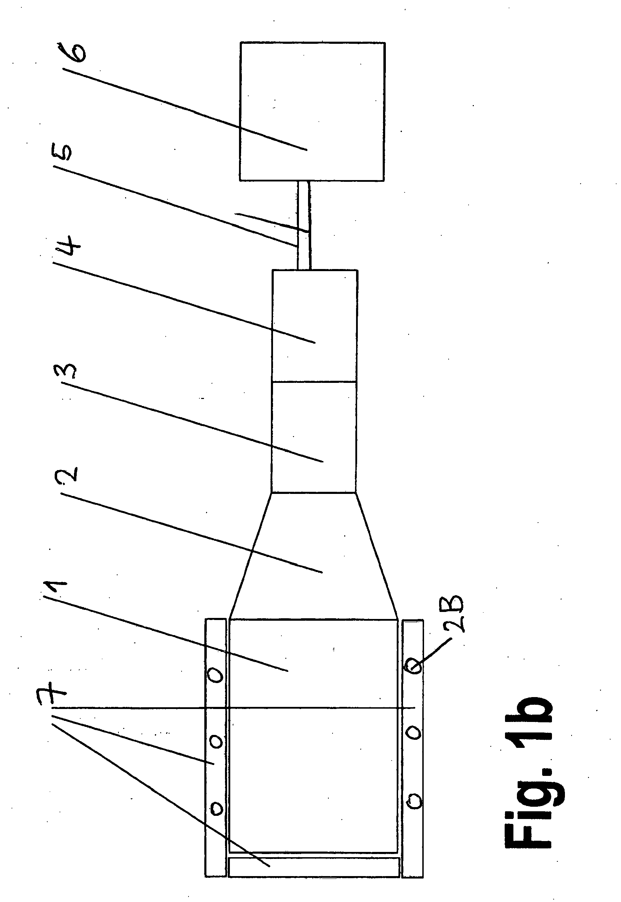

Figur 1 a zeigt ein Detektorsystem 1 zum Messen der Flussdichte hochenergetischer Neutronen, die insbesondere an einem Beschleunigersystem entstehen, wenn ein hochenergetischer Teilchenstrahl bei einem "Verlustereignis" auf Elemente in dem Strahlrohr des Beschleunigersystems trifft.

Das Detektorsystem weist bei den beiden Ausführungsbeispielen einen Detektor in Form eines Szintillationszählers mit einem Photomultiplier 3 auf, der über einen Lichtleiter 2 mit einem Plastikszintillator 1 gekoppelt ist. Abhängig von der nachzuweisenden Strahlung des Zwischennuklids kann als Detektor aber auch ein Proportionalzählrohr, ein Geiger-Müller-Zählrohr, eine lonisationskammer und/oder ein Halbleiterdetektor verwendet werden.

Der Plastikszintillator 1 hat hierbei eine Doppelfunktion insoweit, als dass seine Kohlenstoffatome gleichzeitig als Targetmaterial 2A (als Kreise angedeutet) dient, das zur "Umwandlung" des Ereignisses durch hochenergetische Neutronen in ein Radionuklid als "Zwischenspeicher" dient, dessen Zerfallsstrahlung dann vom Szintillator in bekannter Weise in Photonensignale umgesetzt wird, deren Zahl vom Photomultiplier als elektronische Zählimpulse abgegeben wird. Im Ausführungsbeispiel der Figur 1 a handelt es sich um ⁸Li, das unter Emission von β -Strahlung mit einer Halbwertszeit von 840 ms zerfällt.

Figur 1b zeigt eine Variante, bei der als Targetmaterial 2B z.B. ⁹ Be verwendet wird, das nicht Bestandteil des Szintillatormaterials ist. Dieses Targetmaterial 2B (ebenfalls als Kreise angedeutet) ist dann in Form einer Umhüllung oder eines Mantels 7 des Szintillators 1 ausgeführt, so dass die β-Emission des Zwischennuklids ⁶He nachgewiesen werden kann.

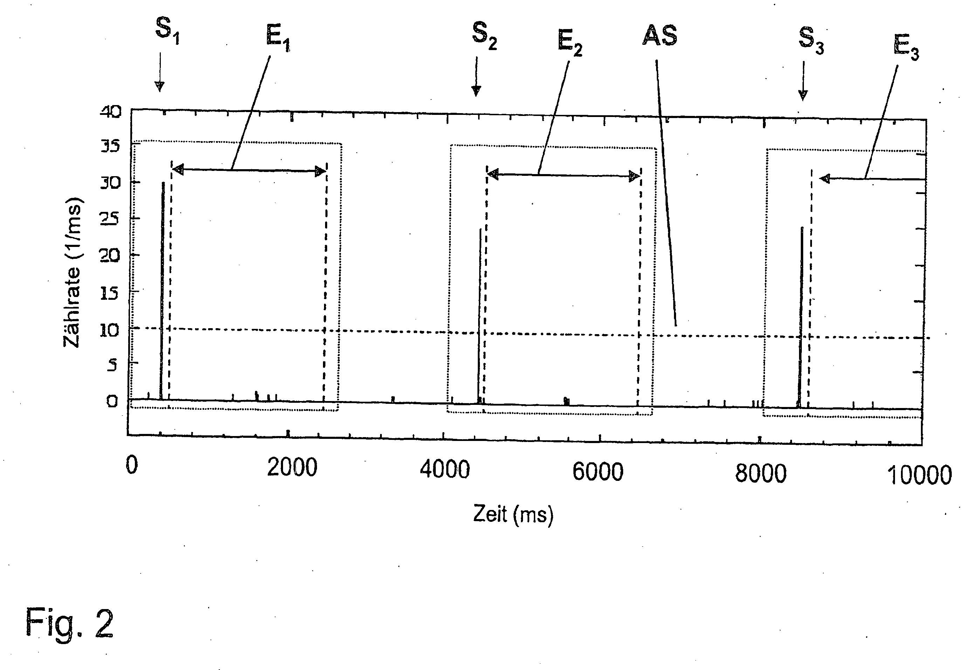

Bei beiden Ausführungsbeispielen ist dem Photomultiplier 3 in bekannter Weise ein Vorverstärker 4 mit Hochspannungsversorgung und Diskriminatorstufen mit mindestens einer Diskriminatorschwelle nachgeschaltet. Über eine entsprechende Anzahl von Signalleitungen 5 gelangen die Impulse der Diskriminatorstufen zu einer Auswerteeinheit 6, in der die Ausgangsimpulse des Vorverstärkers 4 zeitaufgelöst ausgewertet werden, wie dies im folgenden beschrieben wird:
Zunächst wird eine Messung durchgeführt, bei der die Anzahl der im Detektor auftretenden Ereignisse als Funktion der Zeit bestimmt wird, wobei das Ergebnis einer solchen Messung in Figur 2 dargestellt ist. Bei der Messung wird für aufeinander folgende Zeitintervalle j jeweils die Anzahl nⱼ der Ereignisse gezählt, die vom Detektor kommen und von der Auswerteeinheit 6 erfasst werden. Um aus der Anzahl nⱼ dieser Ereignisse die Zählrate aⱼ zu bestimmen, ist es noch erforderlich, die Anzahl nⱼ durch die Länge des Zeitintervalls (tⱼ - tⱼ₋₁) zu dividieren.

Im Rahmen einer sogenannten "Vielpuls-Auswertung" werden durch die Auswertungseinheit 6 eine Vielzahl von Auswertungsrahmen aus einem Startzeitpunkt S₁, S₂, S₃ sowie einem Einzelzeitfenster E₁, E₂, E₃ festgelegt. Dabei wird der Startzeitpunkt S₁, S₂, S₃ jeweils in der Weise festgelegt, dass es sich um das Zeitintervall handelt, wo die Zählrate aⱼ oberhalb einer Auslöseschwelle AS liegt. Die Einzelzeitfenster E₁, E₂ und E₃ haben dann jeweils einen fest vorgegebenen zeitlichen Abstand zu dem Startzeitpunkt S₁, S₂, S₃ sowie eine vorgegebene Länge.

Alternativ zu der Festlegung der Startzeitpunkte S1, S₂, S₃ mittels der Auslöseschwelle AS ist es auch möglich, dass die Startzeitpunkte durch ein äußeres Signal festgelegt werden, was von der Steuerung einer Beschleunigeranlage kommt, in der ein gepulster Teilchenstrahl bereitgestellt wird. Unabhängig von der Art der Festlegung wird jedoch davon ausgegangen, dass zu den Startzeitpunkten S₁, S₂, S₃ ein Verlustereignis stattgefunden hat, in dessen Folge hochenergetische Neutronen erzeugt worden sein könnten.

Die Lage relativ zum Startzeitpunkt und die Länge der Einzelzeitfenster E₁, E₂ und E₃ werden in Abhängigkeit von der Lebensdauer des im Targetmaterial 1 durch hochenergetische Neutronen erzeugten Radionuklids festgelegt.

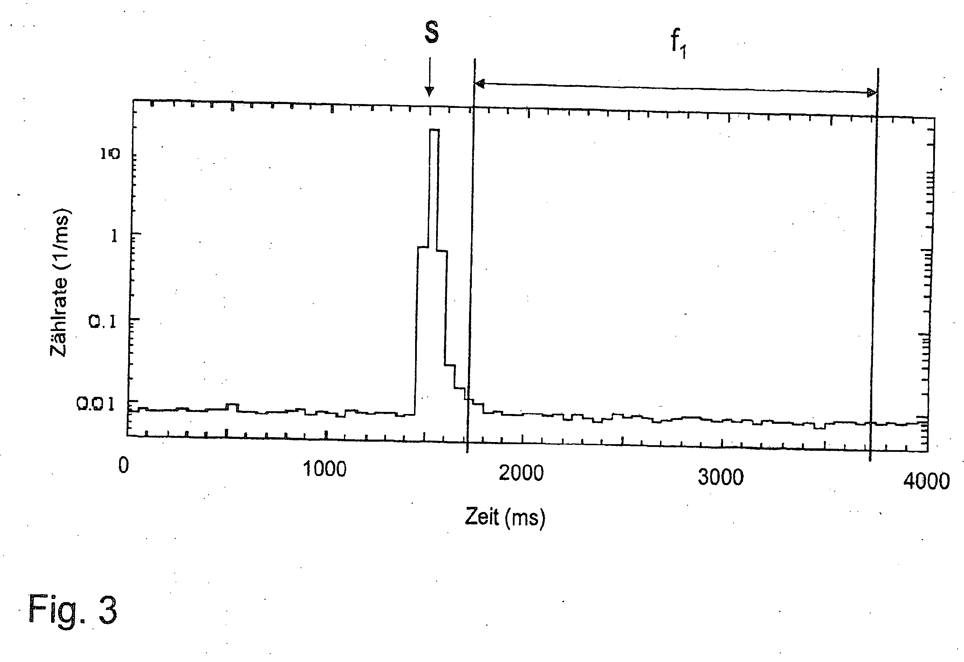

In der Auswertungseinheit 6 wird ein Auswertungszeitfenster f₁durch zeitaufgelöstes Aufsummieren der gemessenen Anzahlen in den Einzelzeitfenstern E₁, E₂, E₃ festgelegt. Zusätzlich werden in diesem bevorzugten Ausführungsbeispiel neben den Einzelzeitfenstern E₁, E₂, E₂ noch die gemessenen Ereignisse aus jedem Auswertungsrahmen zeitaufgelöst addiert, die in dem Bereich zwischen einem Anfangszeitpunkt vor dem Startzeitpunkt und einem Endzeitpunkt nach dem Ende des Einzelfensters liegen. Diese Bereiche sind in Figur 2 durch die gestrichelten Rahmen dargestellt. Somit ergibt sich aus allen Messungen ein in Figur 3 dargestelltes Summenspektrum um einen gemeinsamen "Startzeitpunkt" S. Dieses kann zunächst dahingehend geprüft werden, ob es den erwarteten Verlauf zeigt oder davon abweicht, was entweder auf elektronische Fehler oder sonstige Störungen hinweist.

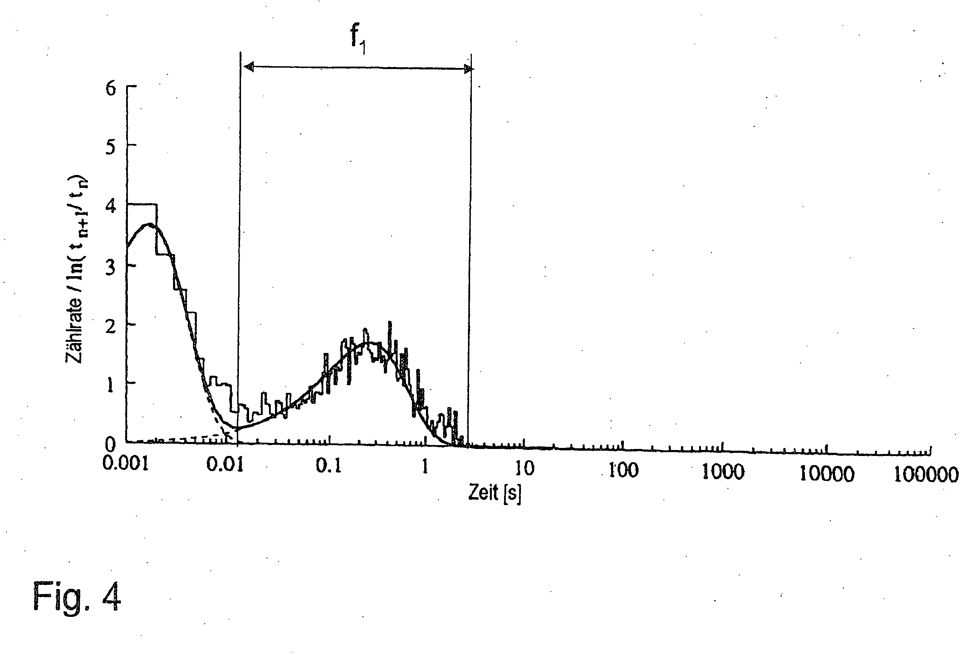

Die Auswertung des Summenspektrums mit dem Auswertungszeitfenster f₁ durch die Auswertungseinheit 6 erfolgt in dem insoweit bevorzugten Ausführungsbeispiel mit Hilfe der sogenannten "Lethargie-Darstellung", wie dies in Figur 4 dargestellt ist. Dabei wird die Zählrate dividiert durch den Logarithmus von tⱼ/tⱼ₋₁, also dem Verhältnis aus dem Ende und dem Beginn des jeweiligen Zeitintervalls, über der Zeit relativ zum Startzeitpunkt S aufgetragen, wobei die Zeitachse eine logarithmische Skala hat. In dieser Darstellung hat der Verlauf einer Zählrate, die einem Zerfallsgesetz folgt, einen Peak bei der Halbwertszeit geteilt durch 1n (2).

Die Höhe des Peaks multipliziert mit e entspricht der Gesamtzahl der Ereignisse, die auf den mit dem Zerfallsgesetz verbundenen Prozess zurückgehen. Somit können allein aus der Lage und der Höhe des Peaks die Parameter des Zerfallsgesetzes bestimmt werden. Dabei ist in dieser Darstellung der Startzeitpunkt aufgrund der logarithmischen Skala der Abzisse nicht gezeigt.

Wie in Figur 4 gezeigt, wird durch das Auswertungszeitfenster f₁ in der Lethargie-Darstellung der Bereich um den Peak erfasst, der durch verzögerte Ereignisse zustande kommt, die auf radioaktive Strahlung zurückgeht, die beim erläuterten Zerfall ⁸Li entsteht. An den Verlauf des Peaks im Summenspektrum wird bei der Auswertung ein Zerfallsgesetz der Form aⱼ = α₀ ˙ 2-^{tj/T1/2} angepasst und daraus das a₀ bestimmt. Der Zählerwert, der von der Auswertungseinheit ausgegeben wird, ist dann wiederum eine Funktion von a₀, wobei bei dieser Vielpuls-Auswertung mit einem Summenspektrum die Statistik deutlich verbessert ist gegenüber einer später beschriebenen Einzelpuls-Auswertung.

"Ausgeben" eines Zählerwertes bedeutet in diesem Zusammenhang, dass die Auswertungseinheit 6 entweder ein Signal mit dem Zählerwert anderen nachgeschalteten Geräten bereitstellt oder dieses Signal für die weitere interne Verarbeitung in der Auswertungseinheit 6 selbst bereitgestellt wird. Der Zählerwert ist dabei ein Maß für die Fluenz hochenergetischer Neutronen, die zu den Startzeitpunkten S₁, S₂, S₃ im Rahmen von Verlustereignissen erzeugt worden sind.

Dieser Auswertung liegt die Überlegung zugrunde, dass die verzögerten Ereignisse, die während des Auswertungszeitfensters f₁ bzw. während der Einzelzeitfenster E₁, E₂, E₂ auftreten, nur durch hochenergetische Neutronen verursacht sein können, die ⁸Li erzeugt haben, das wiederum unter β-Emission zerfällt, wobei dieser Zerfall einem Zerfallsgesetz mit einer Halbwertszeit von 840 ms folgt. Dieser, aus der Auswertung der Ereignisse im Auswertungszeitfenster f₁ gewonnene Zählerwert kann statt der zu den Startzeitpunkten S₁, S₂, S₃ erfassten prompten Ereignisse als Fluenz-Wert verwendet werden, da aufgrund der Totzeiteffekte die Zahl der prompten Ereignisse die Fluenz hochenergetischer Neutronen unterschätzt und daher unbrauchbar ist.

Es ist auch denkbar, dass neben den Einzelzeitfenstern E₁, E₂, E₃ in den Auswertungsrahmen jeweils ein zweites Einzelzeitfenster festgelegt wird, durch das verzögerte Ereignisse aufgrund eines zweiten, im Targetmaterial erzeugten Radionuklids erfasst werden können. In diesem Fall würde ein zweites Auswertungszeitfenster durch Aufsummieren der zweiten Einzelzeitfenster festgelegt.

Es ist auch möglich, das Auswertungszeitfenster direkt innerhalb der gemessenen Daten festzulegen und auf eine vorgeschaltete Aufsummierung mehrerer Fenster zu verzichten, so dass die Fluenz hochenergetischer Neutronen aufgrund eines einzelnen Verlustereignisses zum entsprechenden Startzeitpunkt bestimmt werden kann. Beispielsweise kann als Startzeitpunkt der Zeitpunkt S₁ festgelegt werden und als Auswertungszeitfenster direkt das Einzelzeitfenster E₁.

Die Auswertung erfolgt durch die Auswertungseinheit 6 dann in der Weise, dass die Gesamtzahl der in dem Auswertungszeitfenster in dem Detektor aufgetretenen verzögerten Ereignisse gebildet wird. Wenn die Gesamtzahl der in dem Auswertungszeitfenster gemessenen Ereignisse über einer ersten Schwelle liegt, wird ein Zählerwert unterschiedlich von 0 ausgegeben. Dabei ist der vom Detektor angezeigte Wert proportional zu der Gesamtzahl der in dem Auswertungszeitfenster gemessenen Ereignisse. Dieser Wert wird dann statt der Anzahl von Ereignissen zum Startzeitpunkt S₁ als Maß für die Fluenz von Neutronen genommen.

Alternativ zu dieser einfachen Auswertung der Ereignisse in dem Auswertungszeitfenster mittels einer ersten Schwelle, können die Anzahlen der während des Auswertungszeitfenster im Detektor aufgetretenen verzögerten Ereignisse auch zeitaufgelöst ausgewertet werden. Dazu wird an die Zählrate aⱼ als Funktion des Zeitintervalls j eine Zerfallsfunktion der Form αⱼ = α₀ ˙ 2-^{tj/T1/2} angepasst, wobei die Halbwertszeit T_{1/2} durch die Lebensdauer des intermediären Kerns festgelegt ist. Der durch die Anpassung ermittelte Wert von a₀ ist dann ein Maß für die Fluenz, mit der hochenergetische Neutronen zum Startzeitpunkt im Detektor aufgetreten sind. Der ausgegebene Zählwert ist dann eine Funktion von dem in der Auswertung ermittelten a₀.

Bei dieser Einzelpunls-Auswertung erfolgt die Auswertung auf der Grundlage der Anzahlen, die einem einzelnen Zeitfenster aufgetreten sind. Insbesondere für die zeitaufgelöste Auswertung mit der Anpassung einer Zerfallsfunktion ist aber die Statistik der Anzahlen in dem Auswertungszeitfenster häufig nicht ausreichend, um ein a₀ mit hinreichend kleinem statistischen Fehler bestimmen zu können.

Die Einzelpuls-Auswertung kann alternativ oder zusätzlich zur Vielpuls-Auswertung erfolgen. Es ist aber auch möglich, auf die Einzelpuls-Auswertung zu verzichten und ausschließlich das Summenspektrum auszuwerten.

Durch das erfindungsgemäße Verfahren sowie das Detektionssystem 1 ist es somit möglich, die Anzahl hochenergetischer Neutronen zuverlässig zu bestimmen, die in dem aus dem Targetmaterial 2 gebildeten Detektionsvolumen auftreffen. Insbesondere kann durch die Auswertung der Anzahlen von Ereignissen, die im zweiten Zeitfenster im Detektor auftreten, zwischen Ereignissen durch hochenergetische und niederenergetische Neutronen unterschieden werden, so dass eine korrekte Bestimmung der Äquivalentdosis ermöglicht wird.

## Patentansprüche

1. Verfahren zur Messung der Anzahl hochenergetischer Neutronen in einem vorbestimmten Detektionsvolumen, mit folgenden Schritten:
- Auswahl und Zuordnung mindestens eines Targetmaterials zum Detektionsvolumen derart, dass die zu messenden hochenergetischen Neutronen mit den Kernen des Targetmaterials derart wechselwirken, dass als Zwischenprodukt ein radioaktives Nuklid entsteht, das beim Zerfall α, β, γ - oder Röntgenstrahlen emittiert,
- Zuordnung eines Detektors zum Targetmaterial, der die von diesem emittierte radioaktive α, β, γ - oder Röntgenstrahlung nachweist,
- Durchführen einer Messung, bei der die Anzahl der im Targetmaterial auftretenden Ereignisse als Funktion der Zeit bestimmt wird,
- Festlegen eines Startzeitpunktes (S₁, S₂, S₃),
- Festlegen eines Auswertungszeitfensters (f₁) nach dem Startzeitpunkt,
- Auswerten der in dem Auswertungszeitfensfier (f₁) gemessenen Ereignisse und
- Ausgeben eines Zählerwertes, der von der Anzahl der in dem Targetmaterial zum Startzeitpunkt (S₁, S₂, S₃) aufgetroffenen hochenergetischen Neutronen und dem Ergebnis der Auswertung abhängt,
- wobei der ausgegebene Zählerwert proportional zu der Gesamtzahl der in dem Auswertungszeitfenster (f₁) gemessenen Ereignisse ist, oder wobei das Auswerten durch Anpassen eines Zerfallsgesetzes der Form αⱼ = α₀ · 2^{-tj/T1/2} an die in dem Auswertungszeitfenster (f₁) gemessenen Ereignisse erfolgt und wobei der ausgegebene Zählerwert von a₀ abhängt.

2. Verfahren nach Anspruch 1, **dadurch gekennzeichnet, dass** als Targetmaterial (2A) ¹²C benutzt wird, bei dessen Bestrahlung über die Reaktion ¹²C (n,pα) ⁸Li das Nuklid ⁸Li als Zwischenprodukt gebildet wird, dessen Strahlung vom Detektor gemessen wird.

3. Verfahren nach Anspruch 2, **dadurch gekennzeichnet, dass** der Detektor ein Szintillationszähler ist, der mittels eines Lichtdetektors die Lichtblitze registriert, die von der in einem Plastikszintillator (1) erzeugten Strahlung des ⁸Li-Nuklids hervorgerufen werden.

4. Verfahren nach Anspruch 1, **dadurch gekennzeichnet, dass** als Targetmaterial (2B) ⁹Be oder ²⁰⁷Pb verwendet werden, die Radionuklide als Zwischenprodukt erzeugen, deren Strahlung vom Detektor gemessen wird.

5. Verfahren nach Anspruch 4, **dadurch gekennzeichnet, dass** das Targetmaterial (2B) den Plastikszintillator (1) eines Szintillationszählers umgibt.

6. Verfahren nach Anspruch 1, wobei der Startzeitpunkt als die Zeit festgelegt wird, bei der die Zahl der Ereignisse eine Auslöseschwelle (AS) überschreitet.

7. Verfahren nach Anspruch 1, wobei das Festlegen des Startzeitpunktes (S₁, S₂, S₃) durch ein äußeres Signal erfolgt.

8. Verfahren nach einem der Ansprüche 1 bis 3, wobei das Auswerten die Bestimmung der Gesamtzahl der in dem Auswertungszeitfenster (f₁) gemessenen Ereignisse umfasst, und wobei ein Zählerwert unterschiedlich 0 ausgegeben wird, wenn die Gesamtzahl über einer ersten Schwelle liegt.

9. Verfahren nach einem der Ansprüche 1 bis 6, wobei ein zweites Auswertungszeitfenster festgelegt wird und wobei die in dem zweiten Auswertungszeitfenster gemessenen Ereignisse ausgewertet werden.

10. Verfahren nach Anspruch 9, wobei die Auswertungszeitfenster (f₁) in Abhängigkeit von der Lebensdauer eines im Targetmaterial durch hochenergetische Neutronen erzeugten Radionuklids festgelegt werden.

11. Verfahren nach einem der Ansprüche 1 bis 6, wobei eine Vielzahl von Auswertungsrahmen aus einem Startzeitpunkt (S₁, S₂, S₃) und einem Einzelzeitfenster (E₁, E₂, E₃) festgelegt werden, wobei bei den Auswertungsrahmen der zeitliche Abstand zwischen Startzeitpunkt (S₁, S₂, S₃) und Einzelzeitfenster (E₁, E₂, E₃) gleich ist, und wobei das Auswertungszeitfenster (f₁) durch Aufsummieren der gemessenen Anzahlen in den Einzelzeitfenstern (E₁, E₂, E₃) festgelegt wird.

12. Verfahren nach Anspruch 11, wobei ein Summenspektrum erstellt wird, in dem aus jedem Auswertungsrahmen die zwischen einem Anfangszeitpnkt vor dem Startzeitpunkt (S₁, S₂, S₃) und einem Endzeitpunkt nach dem Ende des Einzelfensters (E₁, E₂, E₃) gemessenen Ereignisse zeitaufgelöst addiert werden.

13. Verfahren nach einem der Ansprüche 11 oder 12, wobei die Auswertungsrahmen zweite Einzelzeitfenster umfassen und wobei ein zweites Auswertungszeitfenster durch Aufsummieren der zweiten Einzelzeitfenster festgelegt wird.

14. Verfahren nach Anspruch 9, wobei der zeitliche Abstand zwischen den Startzeitpunkten (S₁, S₂, S₃) und den Einzelzeitfenstern (E₁, E₂, E₃) in Abhängigkeit von der Lebensdauer eines im Targetmaterial durch hochenergetische Neutronen erzeugten Radionuklids festgelegt wird.

15. Verfahren nach Anspruch 1, **dadurch gekennzeichnet, dass** als Detektor ein Proportionalzählrohr, ein Geiger-Müller-Zählrohr oder eine Ionisationskammer verwendet wird.

16. Verfahren nach Anspruch 1, **dadurch gekennzeichnet, dass** als Detektor ein Halbleiterdetektor verwendet wird.

17. Verfahren nach Anspruch 1, **dadurch gekennzeichnet, dass** als Detektor ein Szintillationszähler mit einem Lichtdetektor, insbesondere einem Photomultiplier (3), verwendet wird.

18. System zum Messen der Anzahl hochenergetischer Neutronen, **gekennzeichnet durch** ein Targetmaterial (2A,2B) für die nachzuweisenden hochenergetischen Neutronen, in dem über eine Kernreaktion des Typs T (n,x) N ein radioaktives Nuklid (N) erzeugt wird, einen Detektor, der in der Lage ist, die von diesem Nuklid (N) emittierte α, β, γ - oder Röntgenstrahlung zu messen, und eine Auswertungseinheit (6), die derart ausgestaltet ist, dass sie eine Messung durchführt, bei der die Anzahl der im Detektor (3) auftretenden Ereignisse als Funktion der Zeit bestimmt wird, **durch**
- Festlegen eines Startzeitpunktes (S₁, S₂, S₃),
- Festlegen eines Auswertungszeitfensters (f₁) nach dem Startzeitpunkt,
- Auswerten der in dem Auswertungszeitfenster (f₁) gemessenen Ereignisse und
- Ausgeben eines Zählerwertes, der von der Anzahl der im Targetmaterial zum Startzeitpunkt (S₁, S₂, S₃) aufgetroffenen hochenergetischen Neutronen und dem Ergebnis der Auswertung abhängt.
- wobei der ausgegebene Zählerwert proportional zu der Gesamtzahl der in dem Auswertungszeitfenster (f₁) gemessenen Ereignisse ist, oder wobei das Auswerten **durch** Anpassen eines Zerfallsgesetzes der Form αⱼ = α₀ · 2-tj/T1/2 an die in dem Auswertungszeitfenster (f₁) gemessenen Ereignisse erfolgt und wobei der ausgegebene Zählerwert von a₀ abhängt.

## Claims

1. A method for measuring the number of high-energy neutrons in a predetermined detection volume, the method comprising the following steps:
- Selection and allocation of at least one target material to the detection volume in such a way that the high-energy neutrons to be measured interact with the nuclei of the target material in such a way that, as an intermediate product, a radioactive nuclide forms which upon decay emits α, β, γ or X - radiation,
- Allocation of a detector to the target material which detects the radioactive α, β, γ or X - radiation,
- Carrying out of a measurement during which the number of the events occurring in the target material is determined as a function of time,
- Specification of a starting time point (S₁, S₂, S₃),
- Specification of an evaluation time frame (f₁) after the starting time point,
- Evaluation of the events measured in the evaluation time frame (f₁) and
- Output of a counter value, which is dependent on the number of high-energy neutrons impinged in the target material at the starting time point (S₁, S₂, S₃) and the result of the evaluation,
- wherein the outputted counter value is proportional to the total number of events measured in the evaluation time frame (f₁), or wherein the evaluation occurs by adapting a decay law in the form αⱼ = αₒ 2^{-tj/T½} to the events measured in the evaluation time frame (f₁) and wherein the counter value output is dependent on αₒ.

2. The method according to claim 1, **characterised in that** ¹²C is used as the target material (2A) on whose irradiation the nuclide 8Li is formed as an intermediate product by means of the reaction ¹²C (n,pα) ⁸Li, wherein the radiation of said intermediate product is measured by the detector.

3. The method according to claim 2, **characterised in that** the detector is a scintillation counter which, by means of a light detector, records the flashes of light caused by the radiation of the ⁸Li nuclide generated in a plastic scintillator (1).

4. The method according to claim 1, **characterised in that** ⁹Be or ²⁰⁷Pb are used as the target material (2B), which generate radio-nuclides as an intermediate product, the radiation of which is measured by the detector.

5. The method according to claim 4, **characterised in that** the target material (2B) surrounds the plastic scintillator (1) of a scintillation counter.

6. The method according to claim 1, wherein the starting time point is specified as the time at which the number of events exceeds a trigger threshold (AS).

7. The method according to claim 1, wherein the specification of the starting time point (S₁, S₂, S₃) occurs by an external signal.

8. The method according to any one of claims 1 to 3, wherein the evaluation includes the determination of the total number of events measured in the evaluation time frame (f₁), and wherein a counter value different from 0 is outputted if the total number is above a first threshold.

9. The method according to any one of claims 1 to 6, wherein a second evaluation time frame is specified and wherein the events measured in the second evaluation time frame are evaluated.

10. The method according to claim 9, wherein the evaluation time frames (f₁) are specified depending on the lifetime of a radio-nuclide generated in the target material by high-energy neutrons.

11. The method according to any one of claims 1 to 6, wherein a multiplicity of evaluation frames from one starting time point (S₁, S₂, S₃) and one individual time frame (E₁, E₂, E₃) is specified, wherein with the evaluation frames, the period of time between starting time point (S₁, S₂, S₃) and individual time frame (E₁, E₂, E₃) is the same, and wherein the evaluation time frame (f₁) is specified by adding together the measured numbers in the individual time frames (E₁, E₂, E₃).

12. The method according to claim 11, wherein a sum spectrum is produced in which, from each evaluation frame, the events measured between an initial time point before the starting time point (S₁, S₂, S₃) and an end time point after the end of the individual frame (E₁, E₂, E₃) are added together in a time-resolved manner.

13. The method according to any one of claims 11 or 12, wherein the evaluation frames include second individual time frames and wherein a second evaluation time frame is specified by adding together the second individual time frames.

14. The method according to claim 9, wherein the period of time between the start time points (S₁, S₂, S₃) and the individual time frames (E₁, E₂, E₃) is specified depending on the lifetime of a radio-nuclide generated in the target material by high-energy neutrons.

15. The method according to claim 1, **characterised in that** a proportional counter, a Geiger-Müller counter or an ionisation chamber is used as the detector.

16. The method according to claim 1, **characterised in that** a semi-conductor detector is used as the detector.

17. The method according to claim 1, **characterised in that** a scintillation counter with a light detector, in particular a photomultiplier (3), is used as the detector.

18. System for measuring the number of high-energy neutrons, **characterised by** a target material (2A, 2B) for the high-energy neutrons to be detected, wherein by means of a nuclear reaction of the type T (n,x) N a radioactive nuclide (N) is generated, a detector which is able to measure the α, β, γ or X - radiation emitted by this nuclide (N), and an evaluation unit (6) which is made such that it carries out a measurement whereby the number of events occurring in the detector (3) is determined as a function of time, by:
- Specification of a starting time (S₁, S₂, S₃),
- Specification of an evaluation time frame (f₁) after the starting time point,
- Evaluation of the events measured in the evaluation time frame (f₁) and
- Output of a counter value, which is dependent on the number of high-energy neutrons impinged in the target material at the starting time point (S₁, S₂, S₃) and the result of the evaluation,
- wherein the outputted counter value is proportional to the total number of events measured in the evaluation time frame (f₁), or wherein the evaluation occurs by adapting a decay law in the form αⱼ = αₒ 2^{-tj/T½} to the events measured in the evaluation time frame (f₁) and wherein the outputted counter value is dependent on aₒ.

## Revendications

1. Procédé pour la mesure du nombre de neutrons hautement énergétiques dans un volume de détection prédéterminé, comprenant les étapes suivantes :
- Sélection et adjonction d'au moins un matériau cible à un volume de détection de façon que les neutrons hautement énergétiques à mesurer interagissent avec les noyaux du matériau cible de façon qu'apparaisse comme produit intermédiaire un nucléide radioactif qui émet des rayons α, β, γ ou X lors de sa désintégration,
- Adjonction d'un détecteur au matériau cible, qui détecte le rayonnement radioactif α, β, γ ou X émis par celui-ci,
- Réalisation d'une mesure lors de laquelle le nombre d'événements survenant dans le matériau cible est déterminé en fonction du temps,
- Définition d'un instant de démarrage (S₁, S₂, S₃),
- Définition d'une fenêtre de temps d'évaluation (f1) après l'instant de démarrage,
- Evaluer les événements mesurés dans la fenêtre de temps d'évaluation (f1) et
- Fournir une valeur de comptage qui dépend du nombre de neutrons hautement énergétiques impactés dans le matériau cible à l'instant de démarrage (S₁, S₂, S₃) et du résultat de l'évaluation,
- dans lequel la valeur de comptage fournie est proportionnelle au nombre total des événements mesurés dans la fenêtre de temps d'évaluation (f1), ou dans lequel l'évaluation est effectuée par ajustement d'une loi de décroissance de la forme αⱼ = α₀ 2^{-tⱼ/T_{1/2}} appliquée aux événements mesurés dans la fenêtre de temps d'évaluation (f1) et dans lequel la valeur de comptage fournie dépend de a₀.

2. Procédé selon la revendication 1, **caractérisé en ce que** ¹²C est utilisé comme matériau cible (2A), lors de son irradiation il se forme comme produit intermédiaire par la réaction ¹²C (n,pa) ⁸Li le nucléide ⁸Li, dont le rayonnement est mesuré par le détecteur.

3. Procédé selon la revendication 2, **caractérisé en ce que** le détecteur est un compteur à scintillation qui enregistre, au moyen d'un détecteur de lumière, les éclairs de lumière qui sont provoqués par le rayonnement produit par le nucléide ⁸Li dans un scintillateur plastique (1).

4. Procédé selon la revendication 1, **caractérisé en ce que** ⁹Be ou ²⁰⁷Pb sont utilisés comme matériau cible (2B), qui produisent des radionucléides comme produit intermédiaire, dont le rayonnement est mesuré par le détecteur.

5. Procédé selon la revendication 4, **caractérisé en ce que** le matériau cible (2B) entoure le scintillateur plastique (1) d'un compteur à scintillation.

6. Procédé selon la revendication 1, dans lequel l'instant de démarrage est défini comme l'instant où le nombre d'événements dépasse un seuil de déclenchement (AS).

7. Procédé selon la revendication 1, dans lequel la définition de l'instant de démarrage (S₁, S₂, S₃) est donnée par un signal externe.

8. Procédé selon l'une des revendications 1 à 3, dans lequel l'évaluation comprend la détermination du nombre total d'événements mesurés dans la fenêtre de temps d'évaluation (f1), et dans lequel une valeur de comptage est fournie différente de 0, si le nombre total se situe au-dessus d'un premier seuil.

9. Procédé selon l'une des revendications 1 à 6, dans lequel une deuxième fenêtre de temps d'évaluation est définie et dans lequel les événements mesurés dans ladite seconde fenêtre de temps d'évaluation sont évalués.

10. Procédé selon la revendication 9, dans lequel les fenêtres de temps d'évaluation (f1) sont définies, en fonction de la durée de vie d'un radionucléide produit dans le matériau cible par des neutrons hautement énergétiques.

11. Procédé selon l'une des revendications 1 à 6, dans lequel une pluralité de trames d'évaluation sont définies à partir d'un instant de démarrage (S₁, S₂, S₃) et d'une fenêtre de temps individuelle (E₁, E₂, E₃), dans lequel l'intervalle de temps entre l'instant de démarrage (S₁, S₂, S₃) et la fenêtre de temps individuelle (E₁, E₂, E₃) est égal dans les trames d'évaluation, et dans lequel la fenêtre de temps d'évaluation est définie en additionnant les nombres mesurés dans les fenêtres de temps individuelles (E₁, E₂, E₃).

12. Procédé selon la revendication 11, dans lequel un spectre de sommes est créé, dans lequel pour chaque trame d'évaluation les événements mesurés entre un instant de début avant l'instant de démarrage (S₁, S₂, S₃) et un instant de fin après la fin de la fenêtre de temps individuelle (E₁, E₂, E₃) sont additionnés de façon séparée temporellement.

13. Procédé selon la revendication 11 ou 12, dans lequel les trames d'évaluation comprennent des secondes fenêtres de temps individuelles, et dans lequel une seconde fenêtre de temps d'évaluation est déterminée en additionnant la deuxième fenêtre de temps individuelle.

14. Procédé selon la revendication 9, dans lequel l'intervalle de temps entre les instants de départ (S₁, S₂, S₃) et les fenêtres de temps individuelles (E₁, E₂, E₃) est défini en fonction de la durée de vie d'un radionucléide produit dans le matériau cible par des neutrons hautement énergétiques.

15. Procédé selon la revendication 1, **caractérisé en ce qu'**un tube de comptage proportionnel, un tube de comptage Geiger-Müller ou une chambre d'ionisation est utilisé comme détecteur.

16. Procédé selon la revendication 1, **caractérisé en ce qu'**un détecteur à semiconducteurs est utilisé comme détecteur.

17. Procédé selon la revendication 1, **caractérisé en ce qu'**un compteur à scintillation avec un détecteur de lumière, en particulier avec un photomultiplicateur (3), est utilisé comme détecteur.

18. Système pour mesurer le nombre de neutrons hautement énergétiques, **caractérisé par** un matériau cible (2A, 2B) pour les neutrons hautement énergétiques à détecter, dans lequel un nucléide radioactif (N) est produit par une réaction nucléaire du type T (n, x) N, un détecteur qui est capable de mesurer, les rayons α, β, γ ou X émis par ce nucléide (N), et une unité d'évaluation (6) qui est conçue de façon à effectuer une mesure dans laquelle le nombre d'événements survenant dans le détecteur est déterminé en fonction du temps, en
- Définissant un instant de démarrage (S₁, S₂, S₃),
- Définissant une fenêtre de temps d'évaluation (f1) après l'instant de démarrage,
- Evaluant les événements mesurés dans la fenêtre de temps d'évaluation (f1) et
- Fournissant une valeur de comptage qui dépend du nombre de neutrons hautement énergétiques impactés dans le matériau cible à l'instant de démarrage (S₁, S₂, S₃) et du résultat de l'évaluation,
- dans lequel la valeur de comptage fournie est proportionnelle au nombre total des événements mesurés dans la fenêtre de temps d'évaluation (f1), ou dans lequel l'évaluation est effectuée par ajustement d'une loi de décroissance de la forme αⱼ = α₀ 2^{-tⱼ/T_{1/2}} appliquée aux événements mesurés dans la fenêtre de temps d'évaluation (f1) et dans lequel la valeur de comptage fournie dépend de a₀.
